# EUROPÄISCHE PATENTANMELDUNG

(11) **EP 4 279 200 A1**
(43) Veröffentlichungstag der Anmeldung: **22.11.2023**
(21) Anmeldenummer: 22173609.3
(22) Anmeldetag: 16.05.2022
(51) Int. Cl.: B22D 17/20, B22C 9/06, B22D 18/02, B22D 17/22, B22D 27/11

(54) **VERFAHREN UND VORRICHTUNG ZUM FORMEN EINER AUSHÄRTBAREN FORMMASSE**

(71) Anmelder: Fraunhofer-Gesellschaft zur Förderung der angewandten Forschung e.V., 80686 München (DE); Technische Universität München, 80333 München (DE)
(72) Erfinder: VOLK, Wolfram, 85435 Erding (DE); GÜNTHER, Daniel, 81371 München (DE); KLAN, Steffen, 85354 Freising (DE); ERHARD, Patricia, 85748 Garching (DE); HARTMANN, Christoph, 80636 München (DE); LECHNER, Philipp, 80333 München (DE); STEINLEHNER, Florian, 80333 München (DE)
(74) Vertreter: Pfenning, Meinig & Partner mbB

(57) **Zusammenfassung**

Die Erfindung betriff eine Vorrichtung (10) und ein Verfahren zum Formen einer aushärtbaren Formmasse (202), mit:
- Aufnehmen einer aushärtbaren Formmasse (202), die sich in einem flüssigen Zustand befindet, in einer Kavität (14), die von einem ersten Formteil (100) und wenigstens einem zweiten Formteil (101) eines Formwerkzeugs (12) begrenzt wird;
- Erzeugen wenigstens einer ersten Relativbewegung zwischen dem ersten und dem zweiten Formteil (100, 101), so dass sich die Kavität (14) verkleinert;
- Aushärtenlassen der Formmasse (202).

## Beschreibung

Die Erfindung betrifft ein Verfahren und eine Vorrichtung zum Formen einer aushärtbaren Formmasse. Hierdurch ist ein Bauteil herstellbar, insbesondere mittels Urformen.

Es ist bekannt, aushärtbare Formmassen mittels eines Formwerkzeugs in eine gewünschte Form zu bringen und in dieser Form aushärten oder, mit anderen Worten erstarren oder verfestigen zu lassen. Auf diese Weise kann aus der zunächst formlosen Formmasse ein Bauteil mit einer gewünschten Form hergestellt werden. Dies kann auch als Urformen des Bauteils bezeichnet werden kann.

Ein typisches Urformverfahren ist das Gießen. In diesem Fall wird die Frommasse in ein Formwerkzeug eingefüllt, in dem sie erstarrt und aus den sie anschließend entnehmbar ist. Es existieren verschiedene Gießverfahren, die sich beispielsweise durch die Art des Formwerkzeugs, der Formmassen und/oder der Art des Einfüllens der Formmasse in das Formwerkzeug unterscheiden.

Ein Nachteil bisheriger Gießverfahren ist, dass gewünschte Bauteile und insbesondere Bauteilgrößen nicht immer mit einer gewünschten Qualität herstellbar sind. Dies betrifft insbesondere Bauteile mit dünnwandigen Bereichen. Unter dünnwandigen Bereichen können im Rahmen dieser Offenbarung allgemein Bereiche mit einer Materialstärke von bis zu 3 mm oder auch bis zum 5 mm verstanden werden. Bei derartigen dünnwandigen Bereichen besteht die Gefahr des Auftretens sogenannter Kaltläufe im Gießprozess. Hierunter kann verstanden werden, dass Anteile der Formmasse verfrüht aushärten, beispielsweise noch während des Einfüllens der Formmasse und bevor sie eine beabsichtigte Position innerhalb des Formwerkzeugs erreichen.

Infolgedessen gilt in der Regel, dass die minimale Wanddicke abhängig ist vom gießtechnischen Herstellverfahren und vom Werkstoff der Formmasse, nicht aber von der Funktion des Bauteils. Je näher man sich der verfahrensspezifischen minimal möglichen Wanddicke nähert, desto größer wird der prozessbedingte Ausschuss.

Hinzu kommt, dass diverse Metalllegierungen mit an sich vorteilhaften Eigenschaften nicht dünnwandig verarbeitbar sind. Beispiele sind Aluminiumknetlegierungen und Stähle. Auch bei Kunststoffen treten Probleme bei der Füllung von Formwerkzeugen mit dünnwandigen Bereichen auf, insbesondere beim Verwenden hochviskoser Formmassen. Zudem sind nicht alle Polymere zuverlässig verarbeitbar (z.B. Teflon). Bei Keramikdruckschlickerguss treten Probleme in Form einer vorzeitigen Entwässerung und Verfestigungen auf und das erzielbare Materialgefüge ist oftmals wenig dicht. Beton als Formmasse ist auf Grund seiner geringen Fließfähigkeit nur für dickwandige Bauteile verwendbar. Eine Formfüllung mittels Beton in Kombination mit Armierungseisen ist zudem oft nur aufwendig realisierbar.

Somit ist die mögliche Formgebung herzustellender Bauteile bisher beschränkt oder es müssen aufwändige Zusatzmaßnahmen getroffen werden, um bespielsweise das Risiko von Kaltläufen zu begrenzen. Diese Zusatzmaßnahmen können zum Beispiel speziell gestaltete Anschnittsysteme umfassen, die einen hohen Anteil flüssiger Formmasse nahe der dünnwandigen Bereiche vorhalten. Auch können wärmeisolierte und/oder beheizte Formen verwendet werden. Ebenso können Druckgussverfahren zum Einsatz kommen. Bei diesen sind die erzielbaren Bauteilgrößen jedoch begrenzt und das Einfüllen der Formmasse unter Druckbeaufschlagung kann Turbulenzen und Lufteinschlüsse innerhalb der Schmelze und somit Qualitätseinbußen des Metallgefüges verursachen. Kerne zur Erzeugung von Hohlstrukturen sind beim Druckguss ferner nicht einsetzbar.

Die Erfindung stellt sich daher die Aufgabe, das Herstellen von Bauteilen aus einer aushärtbaren Formmasse und insbesondere von Bauteilen mit dünnwandigen Bereichen zu verbessern, insbesondere hinsichtlich Kosten, Aufwand und/oder Qualität. Diese Aufgabe wird durch die Gegenstände der beigefügten unabhängigen Patentansprüche gelöst. Vorteilhafte Ausgestaltungen sind in den abhängigen Ansprüchen und in dieser Beschreibung angegeben.

Entsprechend wird ein Verfahren zum Formen einer aushärtbaren Formmasse vorgeschlagen, mit:
- Aufnehmen (oder, mit anderen Worten, Anordnen) einer aushärtbaren Formmasse, die sich in einem flüssigen und insbesondere einem flüssigen oder geschmolzenen Zustand befindet, in einer Kavität, die von einem ersten Formteil und wenigstens einem zweiten Formteil eines Formwerkzeugs begrenzt wird;
- Erzeugen wenigstens einer ersten Relativbewegung zwischen dem ersten und dem zweiten Formteil, so dass sich die Kavität verkleinert, insbesondere wobei die Formmasse in diesem Stadium noch flüssig ist;
- Aushärtenlassen der Formmasse, was insbesondere ein Verstreichenlassen einer definierten Zeitspanne umfassen kann, innerhalb derer die Formteile nicht bewegt werden und/oder die Kavität nicht verändert wird.

Dieses Vorgehen setzt sich von bekannten Gießverfahren dadurch ab, dass die Größe der Kavität, in der die Formmasse aufgenommen wird, im noch nicht ausgehärteten Zustand der Formmasse variiert und insbesondere verkleinert wird. Im Stand der Technik erfolgt keine derartige Variation der Kavität nach einem Einfüllen einer flüssigen Formmasse, sondern wird bis zu dem Erstarren der Formmasse gewartet. Anschließend wird das Formwerkzeug geöffnet, um das fertige Bauteil entnehmen zu können, d.h. die Kavität wird vergrößert und aufgelöst.

Erfindungsgemäß wurde hingegen erkannt, dass das vorgeschlagene Vorgehen ein Aufwärmen der Formteile durch die Formmasse nach deren Einfüllen in die Kavität oder in zumindest eines der Formteile (siehe unten) ermöglicht. Erst anschließend wird die Kavität verkleinert und werden Wandstärken oder auch Volumen der Kavität und somit der darin aufgenommenen und noch flüssigen Formmasse lokal reduziert, insbesondere unter Bilden von dünnwandigen Bereichen der hierin offenbarten Art. Da die Formteile in diesem Zustand aber in einem gewissen Ausmaß durch die zuvor bereits aufgenommene Formmasse aufgewärmt wurden, entziehen sie der Formmasse nur begrenzt Wärme. Das heißt, Anteile der Formmasse, die sich in dünnwandigen Bereichen der Kavität befinden, härten entsprechend langsamer aus, was die Gefahr von Kaltläufen reduziert.

Weiter kann auch unabhängig von einem Risiko von Kaltläufen (d.h. auch bei Formmassen auf Raumtemperatur wie z.B. Beton) mittels der offenbarten Relativbewegung ein zuverlässiges und hochqualitatives Bilden dünnwandiger Bereiche gelingen. Zum Beispiel kann in Abweichung von bisherigen Druckgussverfahren die Formmasse erfindungsgemäß wenig turbulent, sondern vielmehr laminar und gleichmäßig in die dünnwandigen Bereiche gelangen, was Gussfehler vermeidet.

Das Verkleinern der Kavität infolge der ersten Relativbewegung kann ein Verkleinern des Volumens der Kavität umfassen. Die Kavität und somit die darin aufgenommene Formmasse kann hierdurch eine sogenannte Zielgeometrie erreichen. Zusätzlich oder alternativ kann mittels ersten Relativbewegung ein Abstand zwischen wenigstens einem Paar von einander gegenüberliegenden Bereichen der Formteile verringert werden (beispielsweise entlang einer Bewegungsachse der ersten Relativbewegung betrachtet). Dies kann ebenfalls mit einem Verkleinern der Kavität einhergehen, insbesondere einem Verkleinern einer Abmessung der Kavität, die diesem Abstand entspricht.

Das Aufnehmen der Formmasse in der Kavität kann umfassen:
- Einfüllen der Formmasse in die von dem ersten und zweiten Formteil begrenzte Kavität oder, anders ausgedrückt, Einfüllen der Formmasse in das Formwerkzeug, wenn das erste und zweite Formteil bereits derart angeordnet sind, dass die Kavität (zumindest in einem vergrößerten Ausgangszustand oder auch als Vorkavität) gebildet ist.

Alternativ kann das Aufnehmen der Formmasse in der Kavität umfassen:
- Einfüllen der Formmasse in das Formwerkzeug in einem geöffneten Zustand und Relativanordnen von erstem Formteil und zweiten Formteil zum Bilden der Kavität, welche die (bereits eingefüllte) Formmasse aufnimmt.

In dem geöffneten Zustand können das erste und das zweite Formteil voneinander abgehoben sein, insbesondere derart, dass diese keinen Wandbereich der Kavität gemeinsam begrenzen und/oder dass die Formteile sich allgemein nicht berühren. Entsprechend kann in diesem Fall die Formmasse in lediglich in eines der Formteile eingefüllt werden, beispielsweise in eine dort vorhandene Vertiefung. Anschließend können die Formteile derart relativ zueinander angeordnet werden, dass die Kavität gebildet und die bereits eingefüllte Formmasse zwischen ihnen und in der Kavität aufgenommen ist.

Eine Weiterbildung sieht vor, dass die erste Relativbewegung erst dann erzeugt wird, wenn die gesamte Formmasse in der Kavität aufgenommen ist. Beispielsweise kann zum Herstellen eines bestimmten Bauteils ein definiertes Volumen an Formmasse erforderlich sein. Erst wenn dieses vollständig in das Formwerkzeug eingefüllt und infolgedessen in der Kavität aufgenommen ist, kann die Kavität (insbesondere unter Definieren dünnwandiger Bereiche) mittels der ersten Relativbewegung verkleinert werden. Dies erhöht das Ausmaß des Erwärmens der Formteile durch die aufgenommene Formmasse.

Prinzipiell kann vorgesehen sein, die Formmasse derart in das Formwerkzeug einzufüllen, dass (insbesondere ausschließlich) laminare Strömungen innerhalb der Formmasse entstehen. Hierfür kann z.B. eine Einfüllgeschwindigkeit der Formmasse geeignet gewählt werden.

Gemäß einer Variante wird die Formmasse mittels Schwerkraftgießen in das Formwerkzeug eingefüllt. Alternativ kann die Formmasse mittels Druckgießen oder Niederdruckgießen in das Formwerkzeug eingefüllt werden. In diesem Zusammenhang kann der zum Einfüllen aufgebrachte Druck beim Erzeugen der ersten Relativbewegung zumindest teilweise aufrechterhalten oder erhöht werden (z.B. um wenigstens 10%). Hierdurch können Turbulenzen innerhalb der Formmasse reduziert werden.

Eine Ausführungsform sieht im Anschluss an die erste Relativbewegung und optional an das Aushärtenlassen der Formmasse folgendes vor:
- Aufbringen einer Zustellkraft auf wenigstens eines von dem ersten und zweiten Formteil, wobei die Zustellkraft die Formteile gegeneinander drängt.

Zwischen der ersten Relativbewegung und dem Aufbringen der Zustellkraft kann eine definierte Zeitspanne abgewartet werden. Innerhalb dieser Zeitspanne kann die Kavität in ihrem verkleinerten Zustand belassen werden, der infolge der ersten Relativbewegung erreicht wird. Dies kann durch Aufbringen entsprechender Haltekräfte erfolgen oder auch kraftlos. Die Zustellkraft kann einem anschließenden Anstieg (insbesondere einem erneuten Anstieg) einer Kraft entsprechen, die auf wenigstens eines der Formbauteile aufgebracht wird.

Mittels dieser zusätzlichen Zustellkraft kann die Formmasse mit verbesserter Genauigkeit in eine endgültige Form gebracht werden. Zudem hat sich gezeigt, dass hierdurch das Materialgefüge verbessert werden kann, beispielsweise durch Erzielen bevorzugter Korngrößen bei metallischen Formmassen.

Optional kann mittels der Zustellkraft eine weitere Relativbewegung zwischen dem ersten und dem zweiten Formteil erzeugt werden, mittels derer die Kavität verkleinert wird, insbesondere noch zusätzlich verkleinert ausgehend von dem Zustand nach der ersten Relativbewegung. Diese Verkleinerung kann geringer ausfallen als bei der ersten Relativbewegung. Sie kann beispielsweise weniger als 50 % oder auch weniger als 10 % der Verkleinerung bei der ersten Relativbewegung betragen. Dies trägt dem Umstand Rechnung, dass die Formmasse nicht mehr in einem gleichen Ausmaß flüssig sein kann wie bei der ersten Relativbewegung, sondern beispielsweise zumindest anteilig bereits verfestigt ist. Nach der weiteren Relativbewegung kann die Kavität und somit die darin aufgenommene Formmasse ihre endgültige Zielgeometrie erreicht haben.

Zusätzlich oder alternativ kann die Zustellkraft erst dann erzeugt werden, wenn die Formmasse zumindest bereichsweise nicht mehr flüssig ist. Dies kann bedeuten, dass die Formmasse zumindest anteilig und/oder bereichsweise bereits ausgehärtet ist. Auch ein vollständiges Erhärten der Formmasse kann erfolgt sein.

Mittels der Zustellkraft kann die zumindest teilweise ausgehärtete Formmasse somit umgeformt werden, insbesondere abschließend umgeformt zum Erzeugen einer endgültigen Bauteilform und/oder eines endgültigen Materialgefüges.

Gemäß einem weiteren Aspekt ist die Zustellkraft zumindest 10 % höher als eine zum Erzeugen der ersten Relativbewegung aufgebrachte Kraft. Dies ermöglicht ein besonders zuverlässiges und genaues Formen der Formmasse mittels der Zustellkraft. Die Zustellkraft und die zum Erzeugen der ersten Relativbewegung aufgebrachte Kraft können mittels derselben Bewegungseinrichtung erzeugt werden, was das Verfahren und eine hierfür verwendete Vorrichtung vereinfacht.

Das Formwerkzeug kann eine verlorene Form (d. h. eine infolge des Gießprozesses zerstörte Form) oder eine Dauerform bilden. Insbesondere im Fall einer verlorenen Form sind Relativbewegungen von Formteilen bisher unüblich, sodass dünnwandige Bereiche bisher nicht mit der erfindungsgemäß erzielbaren Zuverlässigkeit herstellbar sind.

Eine Weiterbildung des Verfahrens sieht ferner vor:
- Ableiten eines Anteils der Formmasse aus der Kavität während der ersten Relativbewegung (und/oder während jeglicher weiteren Relativbewegung zum Beispiel infolge eines Aufbringens obiger Zustellkraft), d.h. Ableiten desjenigen Formmassenanteils, der aus der sich verkleinernden Kavität herausgedrängt wird.

Hierdurch werden signifikante Verfahrwege im Rahmen der Relativbewegungen und signifikante Verkleinerungen der Kavität ermöglicht. Entsprechend großvolumig kann die Kavität zunächst definiert werden, um ein großes Formmassenvolumen für eine effektive Erwärmung der Formteil aufzunehmen.

In diesem Zusammenhang kann vorgesehen sein, dass das Ableiten wenigstens eines der folgenden umfasst:
- Ableiten des Formmassenanteils in wenigstens eine Auffangkavität, die von wenigstens einem der Formteile begrenzt wird. Die Auffangkavität kann beispielsweise zuvor zumindest teilweise unausgefüllt sein und/oder keinen beizubehaltenden Bestandteil des herzustellenden Bauteils definieren (d. h. dort erstarrende Formmasse kann anschließend vom Bauteil entfernt werden). Die Auffangkavität kann auch als Überlaufbohne bezeichnet werden. Alternativ oder zusätzlich können allgemeine Überlaufbereiche innerhalb des Formwerkzeugs vorgesehen sein.
- Ableiten des Formmassenanteils über einen für das Einfüllen der Formmasse verwendeten Einfüllkanal. Dies kann zum Beispiel ein Zurückdrängen des Formmassenanteils in ein mit dem Einfüllkanal verbundenes Formmassenreservoir und/oder in einen mit dem Einfüllkanal verbundenen Schmelzeerzeuger und/oder in ein mit dem Einfüllkanal verbundenes Anschnittsystem umfassen.
- Ableiten des Formmassenanteils über einen (Fluid-) Kanal, der unter Zerstörung eines definierten Bereichs des Formwerkzeugs gebildet oder geöffnet wird. Beispielsweise kann wenigstens eines der Formteile oder allgemein das Formwerkzeug wenigstens eine Sollbruchstelle umfassen, die infolge einer Druckeinwirkung durch die Formmasse definiert bricht. Diese Sollbruchstelle kann den definierten Bereich des Formwerkzeugs bilden, der durchbrochen und dadurch zerstört wird. Bei diesem definierten Bereich und/oder der Sollbruchstelle kann es sich zum Beispiel um einen Wandbereich einer verlorenen Form mit lokal reduzierter Materialstärke handeln. Dieser Wandbereich kann die Kavität von einem Ableitkanal trennen und durch die Formmasse unter Herstellen einer fluidischen Verbindung von Kavität und Ableitkanal durchbrochen werden. Die Druckeinwirkung der Formmasse kann infolge der ersten oder jeglicher weiteren Relativbewegung der Formteile über einen Schwellenwert hinaus erhöht werden, woraufhin die Sollbruchstelle bricht.

Bei einer Weiterbildung ist in der Kavität wenigstens ein Kern angeordnet, der in der Formmasse eingebettet wird. Wenigstens eines der Formteile, insbesondere eines, dass während der ersten oder jeglicher weiteren Relativbewegung aktiv bewegt wird, kann relativ zu dem Kern beweglich sein. Der Kern kann allgemein ortsfest sein. Beispielsweise kann der Kern über Stangen oder Stege innerhalb der Kavität positioniert werden, wobei wenigstens ein (insbesondere aktiv bewegtes) Formteil relativ zu dem Kern beweglich ist. In diesem Zusammenhang kann das Formteil auch von den Stangen oder Stegen durchdrungen werden. Beispielsweise können diese durch Ausnehmungen innerhalb des Formteils hindurch in die Kavität hineinragen.

Die Erfindung betrifft auch eine Vorrichtung zum Formen einer aushärtbaren Formmasse, mit:
- einem Formwerkzeug, aufweisend ein erstes Formteil und wenigstens ein zweites Formteil, die gemeinsam eine Kavität begrenzen, in der eine aushärtbare Formmasse aufnehmbar ist;
- einer Bewegungseinrichtung, die zum Erzeugen einer Relativbewegung zwischen dem ersten und dem zweiten Formteil eingerichtet ist;
- einer Steuereinrichtung, die dazu eingerichtet ist, die Bewegungseinrichtung zum Erzeugen wenigstens einer die Kavität verkleinernden ersten Relativbewegung zwischen dem ersten und dem zweiten Formteil anzusteuern, wenn die Kavität zumindest teilweise mit der aushärtbaren Formmasse ausgefüllt ist.

Die Vorrichtung kann dazu eingerichtet sein, ein Verfahren gemäß jeglicher hierin offenbarten Variante auszuführen. Hierfür kann insbesondere die Steuereinrichtung dazu eingerichtet sein, jegliche erforderlichen Maßnahmen zu veranlassen und/oder jegliche erforderlichen Ansteuerungen vorzunehmen.

Im Folgenden werden weitere optionale Merkmale und spezielle Ausführungsbeispiele allgemeiner Merkmale des hierin offenbarten Verfahrens und der hierin offenbarten Vorrichtung erläutert. Diese Merkmale und Ausführungsbeispiele können in beliebiger Anzahl und Kombination vorgesehen sein.

Beispielsweise kann gemäß einem allgemeinen Aspekt das Formwerkzeug und/oder können die Formteile wenigstens eines der folgenden Materialien umfassen: Kunststoff, Holz, Keramik, Glas, Glaskeramik, Beton, Zement, Gips, Komposite und/oder Verbundmaterialien, Sand/Binder-Gemische, Formsand, Metall, Stahl, insbesondere Warmarbeitsstahl.

Das Formwerkzeugs und/oder dessen Bauteile können unbeheizt oder beheizbar (d. h. temperiert) sein. Letzteres kann mittels wenigstens einer der folgenden Varianten erfolgen: Heißluftvorwärmung, Strahlungserwärmung, konvektive Erwärmung, Wärmeleitung, elektrische Erwärmung über Widerstandheizung, elektrische Erwärmung über Induktion, elektrische Erwärmung über Stromerwärmung, konturnahe Heizung / Kühlung über Heiz-/Kühlschleifen, Temperierung mit Wasser, Temperierung mit Öl, Temperierung mit flüssigen Metallen, Erwärmung durch chemische Reaktionen.

Die Anzahl der Formteile ist nicht auf zwei beschränkt, d. h. das Formwerkzeug ist nicht zwingend auf zwei durch die Formteile gebildeten Werkzeughälften beschränkt. Stattdessen kann eine höhere Anzahl von Formteilen vorgesehen sein. Allgemein können die Formteile Formschrägen und/oder Rundungen umfassen. Das Formwerkzeug kann als wenigstens eines der Formteile oder auch als zusätzlicher Werkzeugbestandteil wenigstens eines der folgenden umfassen: einen Stempel, eine Matrize, einen Niederhalter, einen Schieber, ein hinterschnittiges Formteil und/oder einen hinterschnittigen Werkzeugbestandteil, einen Dorn, einen Kern.

Das Formwerkzeug kann wenigstens eines der folgenden Merkmale umfassen, jeweils in beliebiger Anzahl, wobei diese Merkmale auch als Hilfsteile des Werkzeugs bezeichnet werden können: einen Gießkanal, einen Entlüftungskanal, einen Überlaufbereich, einen Auswerferstift, eine Führung bzw. Führungsstruktur, einen Temperatursensor, einen Drucksensor, einen Materialdetektor, einen Heißkanal, eine Dichtung, ein Ventil zur Flusssteuerung der Formmasse, eine Sollbruchstelle und/oder eine Membran, einen Überlauf- oder Rücklaufwiderstand (z.B. umfassend einen geometrischen Strömungswiderstand, einen Querschnittsübergang, eine poröse Struktur; einen gezielt induzierten Kaltlauf; einen verlängerten Fließweg; eine Aufrauhung).

Die Arbeitsrichtung der Formteile kann linear sein und/oder lediglich eine Bewegungsrichtung umfassen. Alternativ können mehrere Arbeitsrichtungen und/oder komplexe Bewegungen in mehrere aufeinanderfolgende Arbeitsrichtungen erfolgen.

Die Formmasse kann wenigstens eines der folgenden Materialien umfassen: thermoplastischen Kunststoff, Duroplast, faserverstärkte Komposite, eine keramische Gießmasse, Gips, Beton, insbesondere Ultrahochfester Beton (UHPC), Polymerbeton, Metall z.B. Magnesium, Aluminium, Kupfer, Zink, Zinn, Eisen, Nickel, Blei, Titan und deren Legierungen, Aluminiumknetlegierung, Gusseisen, Stahl.

Die Materialzufuhr oder, mit anderen Worten, das Einfüllen der Formmasse kann gemäß einer der folgenden Varianten erfolgen: die Formteile können komplett in die flüssige Formmasse getaucht und dort geschlossen werden; es kann ein Schwerkraftguss ins offene Formwerkzeugs erfolgen; eines der Formteile kann einen Einfüllkanal umfassen, insbesondere ein als Stempel ausgebildetes Formteil, das in ein als Matrize ausgebildetes Formteil hinein bewegt wird; ein seitlicher Heißkanal kann vorgesehen sein; per Niederdruckprinzip kann von vertikal unten durch eines der Formteile und insbesondere durch ein als Matrize ausgebildetes Formteil die Formmasse zugeführt werden; die Formmasse kann in die Kavität aufgenommen und erst dort erhitzt und insbesondere geschmolzen werden.

Zusätzlich oder alternativ können jegliche der nachstehenden Hilfsstoffe, allein oder in beliebiger Kombination, zum Einsatz kommen: Schmier- oder Gleitmittel, Trennmittel, Schlichte zum chemischen Schutz, Schlichte zur Anpassung des Wärmeübergangs, Schlichte zur Modifikation der Randschichtzusammensetzung / Kornmorphologie.

Ausführungsbeispiele der Erfindung werden im Folgenden anhand der beigefügten schematischen Figuren erläutert. Gleichartige oder gleichwirkende Merkmale können Figuren übergreifend mit den gleichen Bezugszeichen versehen sein.
- Figur 1: zeigt Betriebszustände a) - d) einer Vorrichtung gemäß einem ersten Ausführungsbeispiel, das ein Verfahren gemäß einem ersten Ausführungsbeispiel ausführt.
- Figur 2: zeigt Betriebszustände a) - b) einer Vorrichtung gemäß einem zweiten Ausführungsbeispiel, das ein Verfahren gemäß einem zweiten Ausführungsbeispiel ausführt.
- Figur 3: zeigt Betriebszustände a) - b) einer Vorrichtung gemäß einem dritten Ausführungsbeispiel, das ein Verfahren gemäß einem dritten Ausführungsbeispiel ausführt.
- Figur 4: zeigt Betriebszustände a) - b) einer Vorrichtung gemäß einem vierten Ausführungsbeispiel, das ein Verfahren gemäß einem vierten Ausführungsbeispiel ausführt.
- Figur 5: zeigt Betriebszustände a) - d) einer Vorrichtung gemäß einem fünften Ausführungsbeispiel, das ein Verfahren gemäß einem fünften Ausführungsbeispiel ausführt.
- Figur 6: zeigt Betriebszustände a) - b) einer Vorrichtung gemäß einem sechsten Ausführungsbeispiel, das ein Verfahren gemäß einem sechsten Ausführungsbeispiel ausführt.

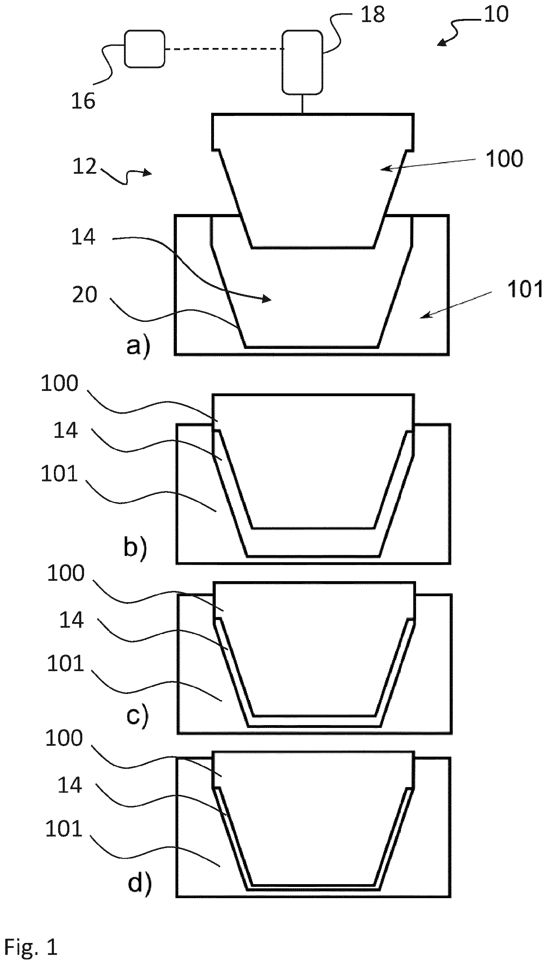

In Figur 1 ist eine Vorrichtung 10 gezeigt, die ein Formwerkzeug 12 umfasst. Das Formwerkzeug 12 weist zwei Formteile 100, 101 auf. Ein Formteil 100 ist als ein Stempel ausgebildet und ein anderes Formteil 101 ist als eine Matrize ausgebildet.

Das Formwerkzeug 12 kann als verlorene Form zum Beispiel aus Sand oder als eine Kokille ausgebildet sein.

Das Formteil 101 ist ortsfest. Das Formteil 100 ist beweglich. Hierfür ist es mit einer schematisch dargestellten Bewegungsrichtung 18 mechanisch gekoppelt, insbesondere mit einem Aktor der Bewegungseinrichtung 18, beispielsweise einem hydraulischen Zylinder.

Die Vorrichtung 10 umfasst auch eine Steuereinrichtung 16, beispielsweise einen Computer und/oder umfassend wenigstens einen Prozessor. Die Steuereinrichtung 16 ist dazu eingerichtet, die Bewegungsrichtung 18 über eine gestrichelt dargestellte kabelgebundene oder kabellose Datenverbindung anzusteuern, sodass das Formteil 100 in einer gewünschten Weise bewegt wird.

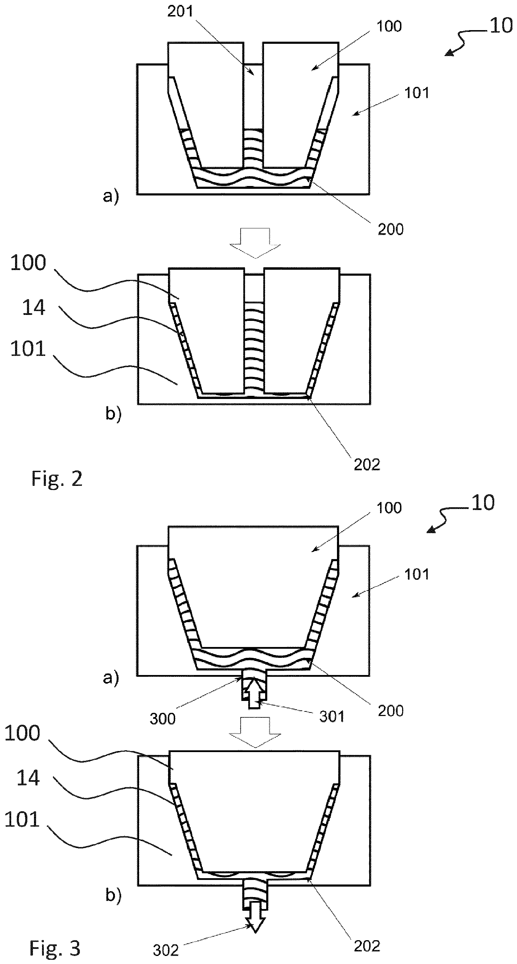

Die Steuereinrichtung 16 und die Bewegungsrichtung 18 sind nur in dem Zustand a) abgebildet aber auch in den weiteren Zuständen b) - d) vorhanden. Auch bei den Vorrichtungen 10 gemäß den weiteren Figuren 2-6 sind die Steuereinrichtung 16 und die Bewegungsrichtung 18 nicht abgebildet, aber dennoch vorhanden.

Das Formteil 101 weist eine Vertiefung 20 auf, in die das Formteil 100 hinein bewegbar ist. Der Zwischenraum zwischen dieser Vertiefung 20 und einer gegenüberliegenden und dort hinein bewegbaren Fläche des Bauteils 100 bildet eine Kavität 14 zur Aufnahme einer nicht dargestellten Formmasse.

In Figur 1 sind die zeitlich aufeinanderfolgende Betriebszustände a)- d) gezeigt, die jeweils Verfahrensschritten des von der Vorrichtung 10 ausgeführten Verfahrens entsprechen.

In Zustand a) ist das Formwerkzeugs 12 in einem geöffneten Zustand gezeigt. Das Formteil 100 ist deutlich aus der Vertiefung 20 des Formteils 101 heraus bewegt und die Kavität 14 ist nicht vollständig durch die Formteile 100, 101 umschlossen oder, mit anderen Worten, nicht vollständig durch diese definiert. In diesem Zustand kann die Kavität 14 als offen, als aufgelöst oder als noch nicht vollständig ausgebildet bezeichnet werden.

Beispielsweise per Schwerkraftguss wird eine nicht dargestellte Formmasse in einem flüssigen und insbesondere geschmolzenen Zustand in die Vertiefung 20 eingefüllt. Die Formmasse ist dabei auf eine Temperatur oberhalb der Raumtemperatur erhitzt, beispielsweise auf über 100 °C. Die Formmasse kann jegliches hierin offenbarte Materialbeispiel umfassen und insbesondere eine Metallschmelze sein.

Im Zustand b) ist das Formteil 100 mittels der Bewegungsrichtung 18 in die Vertiefung 20 des Formteils 101 teilweise abgesenkt worden. Infolgedessen wird die Kavität 14 gebildet und/oder ist diese vollständig von den Formteil 100, 101 umschlossen und vollständig zwischen diesen definiert. Dies kann als das Ausbilden einer vergrößerten Vorkavität bezeichnet werden. Die nicht dargestellte Formmasse füllt die Kavität 14 vollständig aus und erwärmt somit die Formteile 100, 101. Nicht dargestellt sind dem Fachmann bekannte Merkmale wie Entlüftungsbohrungen, die das Umschließen der Formmasse mittels der Formteile 100, 101 ermöglichen.

Anschließend erfolgt eine weitere Absenkung des Formteils 100 zum Erreichen des Zustands c). Es ist darauf hinzuweisen, dass ausgehend vom Zustand a) das Absenken des Formteils 100 im Rahmen einer kontinuierlichen ersten Relativbewegung erfolgen kann. Diese erste kontinuierliche Relativbewegung kann den Zustand b) als Zwischenstadium einschließen und mit dem Zustand d) enden, bei dem eine Zielgeometrie erreicht ist. Der Zustand c) bilden in diesem Fall ein Zwischenstadium ab, der auch als das Erreichen einer Vorgeometrie bezeichnet werden kann.

Es kann jedoch auch eine erste Relativbewegung der hierin offenbarten Art (insbesondere eine kontinuierliche Relativbewegung) erst ausgehend vom Zustand b) erfolgen. Beispielsweise kann nach dem Erreichen von Zustand b) eine definierte Zeitspanne für das Erwärmen der Formteile 100, 101 abgewartet werden.

In Zustand c) ist die Kavität 14 gegenüber dem Zustand b) deutlich verkleinert, hat also ein Volumen der Kavität 14 abgenommen. Auch erfolgt diese Verkleinerung unter Ausbilden dünnwandiger Bereiche, da die Abstände zwischen einander gegenüberliegenden Bereichen und Flächen der Formteile 100, 101 reduziert werden. Diese dünnwandigen Bereiche können Materialstärken von nicht mehr als 5 mm oder nicht mehr als 3 mm aufweisen. Mit anderen Worten können derartige dünnwandige Materialstärken durch die Kavität ausgeformt oder vorgeben werden.

In dem Zustand c) dringt die nach wie vor flüssige Formmasse ohne das Ausbilden von Kaltläufen in die dünnwandigen Bereiche vor und füllt diese vollständig aus. Dies erfolgt unter laminaren Strömungsverhältnissen, was die Qualität des Gusserzeugnisses beispielsweise gegenüber einem turbulenten Druckgießen deutlich erhöht.

Beim Übergang von Zustand b) zum Zustand c) strömt überschüssige Formmasse zurück in einen nicht dargestellten Einfüllkanal. Wie erwähnt, kann eine Verkleinerung der Kavität 14 bei noch flüssiger Formmasse bis zum Zustand d) fortgesetzt werden (d.h. bis zum Erreichen der Zielgeometrie), bevor die Formmasse erstarrt.

Zusammengefasst kann im Rahmen einer kontinuierlichen Relativbewegung ausgehend von Zustand b) (Vorkavität) unter Durchlaufen von Zustand c) (Vorgeometrie) der Zustand d) (Zielgeometrie) erreicht werden und kann erst dann die Formmasse aushärten.

Alternativ kann der Zustand d) ausgehend von dem Zustand c) erst nach Ablauf einer definierten Zeitspanne angefahren werden. Innerhalb dieser Zeitspanne beginnt die Formmasse zumindest teilweise und/oder bereichsweise auszuhärten und ist folglich nicht mehr vollständig flüssig. Anschließend wird mittels der Bewegungsrichtung 18 eine Zustellkraft erzeugt, welche das Formteil 100 weiter in die Vertiefung 20 des Formteils 101 zum Erreichen von Zustand d) hineindrängt. Die bereits teilweise oder vollständig erstarrte Formmasse wird hierdurch zu einer endgültigen Bauteilgeometrie umgeformt. In einem solchen Fall ist das Formwerkzeug 12 vorteilhafterweise als Dauerform ausgebildet, um der Zustellkraft standzuhalten.

Abschließend kann zum Zustand a) oder auch zu einem noch weiter geöffneten Zustand (nicht dargestellt) des Formwerkzeugs 12 gewechselt werden, um das aus der ausgehärteten Formmasse geformte Bauteil zu dem Formwerkzeug 12 zu entnehmen.

Figur 2 zeigt eine Abwandlung der ersten Ausführungsform, wobei in dem ersten Formteil 101 ein Einfüllkanal 201 zum Ausführen eines Schwerkraftgussverfahrens ausgebildet ist. Der Zustand a) aus Figur 2 entspricht weitestgehend dem Zustand b) aus Figur 1 (Vorkavität) und zeigt das anfängliche Einfüllen einer geschmolzenen Formmasse 200 durch den Einfüllkanal 201. Infolgedessen werden die Formteile 100, 101 durch die Formmasse 200 erwärmt.

Der Zustand b) von Figur 2 entspricht einer Zielgeometrie gemäß dem Zustand d) aus Figur 1 und wird durch eine Relativbewegung des Formteils 100 in das Formteil 101 hinein erreicht (siehe Bewegungspfeil im Zustand b)). Die zwischen diesen Formteilen 100, 101 begrenzte Kavität 14 verkleinert sich unter Ausbilden dünnwandiger Bereiche. In diese dringt die noch flüssige Formmasse ohne Gussfehler und unter laminaren Strömungsverhältnissen entlang der erwärmten angrenzenden Flächen der Formteile 101, 100 vor.

Figur 3 zeigt einen zu Figur 2 vergleichbaren Ablauf, jedoch für ein Niederdruckgießen. In diesem Fall wird die Formmasse 200 gemäß an sich bekannten Niederdruckgussverfahren von vertikal unten durch einen Einfüllkanal 300 in die Kavität 14 zwischen den Formteilen 100, 101 eingefüllt. Anders ausgedrückt steigt die Formmasse 200 in die Kavität 14 unter Druckbeaufschlagung auf, siehe Strömungsrichtung 301. Die Formteile 100, 101 können eine Dauerform bilden und beispielsweise aus Warmarbeitsstahl hergestellt sein.

In dem Zustand a) (Vorkavität) füllt die Formmasse daraufhin die Kavität 14 zumindest teilweise und insbesondere vollständig aus, um eine Erwärmung der Formteile 100, 101 zu erzielen. Anschließend wird das Formteil 100 relativ zu dem Formteil 101 abgesenkt (siehe Bewegungspfeil in dem Zustand b), der einer Zielgeometrie entspricht). Die Kavität 14 verkleinert sich daraufhin unter Ausbilden und Ausfüllen dünnwandiger Bereiche mit der noch flüssigen Formmasse 200. Überschüssige Formmasse 200 wird aus der Kavität 14 in den Einfüllkanal 300 zurückgedrängt, siehe Strömungsrichtung 302.

Optional kann analog zum Zustand d) aus Figur 1 nach Aushärten der Formmasse mittels einer zusätzlichen Zustellkraft das erstarrte Bauteil unter weiterer Verkleinerung der Kavität 14 noch weiter umgeformt werden. In diesem Fall kann der Einfüllkanal 300 vor dem Aufbringen der Zustellkraft zum Beispiel mittels eines nicht dargestellten Ventils verschlossen werden.

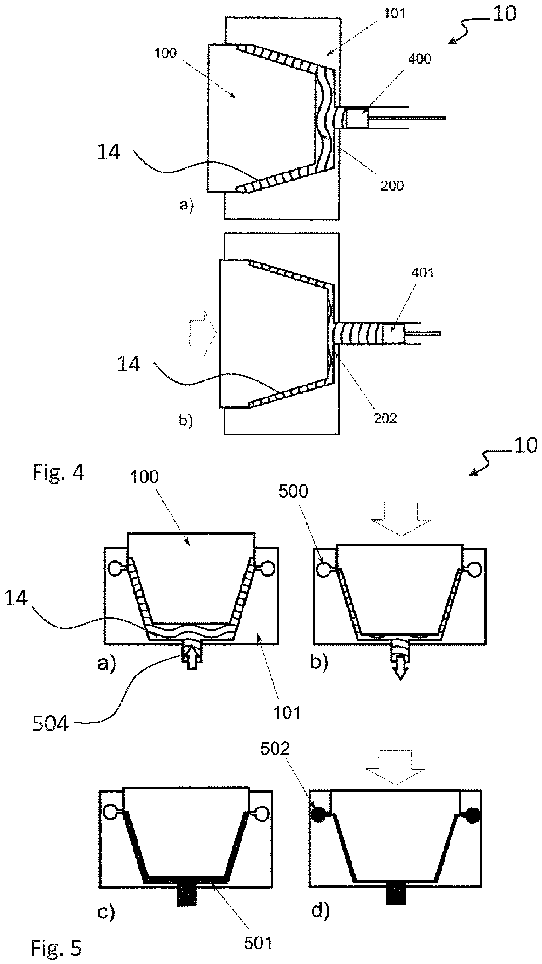

Figur 4 zeigt einen zu Figur 3 analogen Ablauf, jedoch für ein Druckgussverfahren mit seitlichem Zuführen der Formmasse 200. Genauer gesagt wird die Formmasse 200 mittels eines Schiebers 400 in dem Zustand a) (vergrößerte Vorkavität) in die Kavität 14 zwischen den Formteilen 100, 101 laminar eingefüllt und erwärmt die Formteile 100, 101.

Im Zustand b) (Zielgeometrie) verkleinert sich die Kavität 14 aufgrund der Bewegung des Formteils 100 in das Formteil 101 hinein (siehe Bewegungspfeil). Überschüssige Formmasse wird aus der Kavität 14 unter Zurückdrängen des Schiebers 401 heraus gedrängt.

Figur 5 zeigt eine Vorrichtung 10, bei der das ortsfeste Formteil 101 wenigstens eine Auffangkavität 500 umfasst (zum Beispiel ausgebildet als umlaufender Ring). Die Auffangkavität 500 kann auch als Überlaufbohne bezeichnet werden.

Im Zustand a) (Vorkavität) wird die Formmasse analog zu Figur 4 per Niederdruckverfahren über einen Einfüllkanal 504 eingefüllt und steigt in der Kavität 14 auf (siehe mit Pfeil angedeutete Strömungsrichtung). Sie erwärmt darauhin die Formteile 100, 101. Im Zustand b) (Vorgeometrie) wird das Formteil 100 in das Formteil 101 abgesenkt, wodurch überschüssige Formmasse aus der Kavität 14 heraus gedrängt wird (siehe mit unterem Pfeil angedeutete Strömungsrichtung). Wie durch eine abweichende Schraffur bzw. Füllung angedeutet, beginnt die Formmasse 501 daraufhin zu erstarren und wird zähflüssig und/oder härtet aus. Nach Ablauf einer entsprechenden Aushärtezeitspanne wird zum Erreichen von Zustand d) (Zielgeometrie) eine Zustellkraft aufgebracht, wodurch das Formteil 100 weiter abgesenkt und die Kavität 14 wird weiter verkleinert wird. Die Formmasse 501 gelangt daraufhin in die Auffangkavität 500 und bildet dort überschüssige Bauteilbereiche 502, die anschließend entfernt werden können.

Im Zustand von Figur d) kann der Einfüllkanal 504 mittels eines nicht dargestellten Ventils verschlossen werden und/oder kann der Einfüllkanal 504 durch erstarrte Formmasse verschlossen sein.

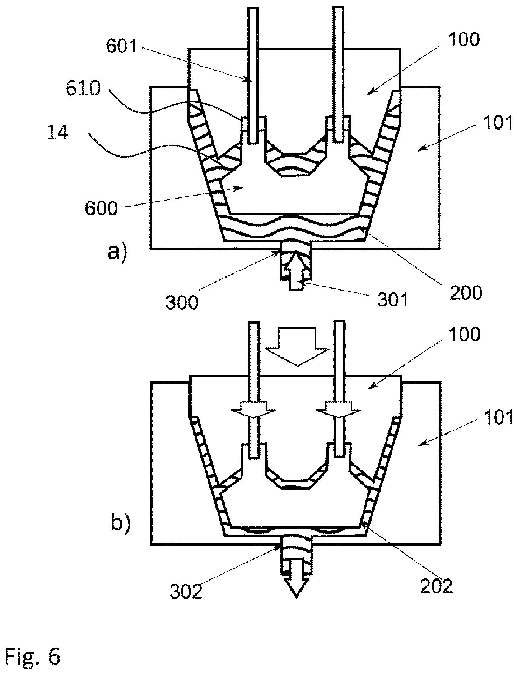

Figur 6 zeigt eine Variante mit einem zusätzlichen Kern 600 zum Definieren einer Hohlstruktur im hergestellten Bauteil. Das Formteil 100 weist Ausnehmungen auf, in denen Stangen 601 eingeführt sind. Die Stangen 601 dienen als Halte- und Positioniereinrichtung, um den Kern 600 in der Kavität 14 zu positionieren.

Im Zustand a) wird wiederum Formmasse 200 per Niederdruckverfahren über einen Einfüllkanal 300 in die Kavität 14 eingefüllt (siehe Strömungsrichtung 301). Die Formmasse 200 bettet dabei den Kern 600 ein oder, mit anderen Worten, umhüllt diesen.

Der Kern 600 weist zunächst ein definiertes Spiel 610 zu dem Formteil 100 auf, insbesondere entlang einer Bewegungsachse des Formteils 100 betrachtet. Mittels dieses Spiels kann ein Bewegungsausmaß des Kerns 600 relativ zu den Formteilen 100, 101 eingestellt werden. Zum Erreichen von Zustand b) wird das Formteil 100 in das Formteil 101 abgesenkt (siehe Bewegungspfeile), und zwar relativ zu den zunächst feststehenden Stangen 601. Erst nach Überbrückung des Spiels 610 wird eine Bewegungskraft von dem Formteil 101 auf den Kern 600 übertragen, sodass dieser gemeinsam mit dem Formteil 100 absenkbar ist.

Bei Erreichen Zustand b) ist die Zielgeometrie erreicht, bei der die Kavität 14 verkleinert ist und dünnwandige Bereiche aufweist. Wie per Strömungspfeil 302 angedeutet, kann überschüssige Formmasse über den Einfüllkanal 300 aus der Kavität 14 heraus gedrängt werden.

In der nachstehenden Tabelle sind für Ausführungsbeispiele erfindungsgemäßer Verfahren Zustände einer Formmasse in Abhängigkeit von Positionen der Formteile 100, 101 eingetragen. Der Zustand "offen" entspricht dem Zustand aus Figur 1 a). Der Zustand "Vorkavität" entspricht einem Zustand mit anfänglich vergrößerter Kavität wie beispielsweise in Figur 1 b).

Der Zustand " "Vorgeometrie" entspricht einer gegenüber der "Vorkavität" bereits verkleinerten, aber noch nicht endgültig reduzierten Kavität wie zum Beispiel im Fall von Figur 1 c). Der Zustand "Zielgeometrie" entspricht einem maximal reduzierten Volumen der Kavität, siehe beispielsweise Figur 1 d).

Die nachstehenden Zustände der Formmasse können zum Beispiel durch Wahl geeigneter Zeitspannen zwischen den einzelnen Bewegungszuständen des Formwerkzeugs erreicht werden und/oder durch Wahl der Formmasse und/oder durch Wahl von deren Einfülltemperatur.

Bei einem Gießen in eine Sandform (optional mit einem bewegten Kernpaket wie in Figur 6) ergibt sich gemäß einer Ausführungsform folgender Ablauf, wobei mit "X" der bei dem jeweiligen Formwerkzeugs-Zustand vorliegende Zustand der Formmasse markiert ist:

| Zustand Formwerkzeug | Formmasse flüssig | Formmasse breiig | Formmasse fest |
|---|---|---|---|
| offen | X | | |
| Vorkavität | X | | |
| Vorgeometrie | X | | |
| Zielgeometrie | X | | |
| Abkühlung | | | X |
| | | | |

Bei einem anderen beispielhaften Ablauf, der aufgrund des Formens einer breiigen Masse einer Art Thixoforming-Verfahren entspricht, ergibt sich folgender Ablauf. Beispielhaft wird die Formmasse erst bei Vorliegen der Vorkavität und zum Beispiel per Niederdruckverfahren eingefüllt:

| Zustand Formwerkzeug | Formmasse flüssig | Formmasse breiig | Formmasse fest |
|---|---|---|---|
| offen | | | |
| Vorkavität | X | | |
| Vorgeometrie | | X | |
| Zielgeometrie | | X | |
| Abkühlung | | | X |

Bei einem anderen beispielhaften Ablauf, bei dem die Formmasse bereits bei Vorliegen der Vorgeometrie erstarrt und erst anschließend in die Zielgeometrie durch Aufbringen einer weiteren Zustellkraft umgeformt wird, ergibt sich folgender Ablauf. Dieser kann auch als Gießschmieden bezeichnet werden:

| Zustand Formwerkzeug | Formmasse flüssig | Formmasse breiig | Formmasse fest |
|---|---|---|---|
| offen | X | | |
| Vorkavität | X | | |
| Vorgeometrie | | | X |
| Zielgeometrie | | | X |
| Abkühlung | | | X |

### Bezugszeichenliste

- 10: Vorrichtung
- 12: Formwerkzeug
- 14: Kavität
- 16: Steuereinrichtung
- 18: Bewegungseinrichtung
- 20: Vertiefung
- 100: Formteil
- 101: Formteil
- 201: Einfüllkanal
- 202: Formmasse
- 300: Einfüllkanal
- 301-302: Strömungsrichtung
- 500: Auffangkavität
- 501: erhärtete Formmasse
- 502: überschüssiger Bauteilbereich
- 504: Einfüllkanal
- 600: Kern
- 601: Stange
- 610: Spiel

## Patentansprüche

1. Verfahren zum Formen einer aushärtbaren Formmasse (202), mit:
- Aufnehmen einer aushärtbaren Formmasse (202), die sich in einem flüssigen Zustand befindet, in einer Kavität (14), die von einem ersten Formteil (100) und wenigstens einem zweiten Formteil (101) eines Formwerkzeugs (12) begrenzt wird;
- Erzeugen wenigstens einer ersten Relativbewegung zwischen dem ersten und dem zweiten Formteil (100, 101), so dass sich die Kavität (14) verkleinert;
- Aushärtenlassen der Formmasse (202).

2. Verfahren nach Anspruch 1,
wobei das Aufnehmen der Formmasse (202) umfasst:
- Einfüllen der Formmasse (202) in die von dem ersten und zweiten Formteil (100, 101) begrenzte Kavität (14); oder
- Einfüllen der Formmasse (202) in das Formwerkzeug (12) in einem geöffneten Zustand und Relativanordnen von dem ersten Formteil (100) und zweiten Formteil (101) zum Bilden der Kavität (14), welche die Formmasse (202) aufnimmt.

3. Verfahren nach Anspruch 1 oder 2,
wobei die erste Relativbewegung erst dann erzeugt wird, wenn die gesamte Formmasse (202) in der Kavität (14) aufgenommen ist.

4. Verfahren nach einem der vorangehenden Ansprüche,
wobei die Formmasse (202) mittels Druckgießen oder Niederdruckgießen in das Formwerkzeug (12) eingefüllt wird, wobei der zum Einfüllen aufgebrachte Druck beim Erzeugen der ersten Relativbewegung zumindest teilweise aufrechterhalten oder erhöht wird.

5. Verfahren nach einem der vorangehenden Ansprüchen,
ferner aufweisend im Anschluss an die erste Relativbewegung:
- Aufbringen einer Zustellkraft auf wenigstens eines von dem ersten und zweiten Formteil (100, 101), die die Formteile (100, 101) gegeneinander drängt.

6. Verfahren nach Anspruch 5,
wobei mittels der Zustellkraft eine weitere Relativbewegung zwischen dem ersten und dem zweiten Formteil (100, 101) erzeugt wird, mittels derer die Kavität (14) verkleinert wird.

7. Verfahren nach Anspruch 5 oder 6,
wobei die Zustellkraft erst dann erzeugt wird, wenn die Formmasse (202) zumindest bereichsweise nicht mehr flüssig ist.

8. Verfahren nach einem der Ansprüche 5 bis 7,
wobei die Zustellkraft zumindest 10 % höher ist als eine zum Erzeugen der ersten Relativbewegung aufgebrachte Kraft.

9. Verfahren nach einem der vorangehenden Ansprüche,
wobei das Formwerkzeug (12) eine verlorene Form oder eine Dauerform bildet.

10. Verfahren nach einem der vorangehenden Ansprüche,
ferner aufweisend:
- Ableiten eines Anteils der Formmasse (202) aus der Kavität (14) während der ersten Relativbewegung.

11. Verfahren nach Anspruch 10,
wobei das Ableiten wenigstens eines der folgenden umfasst:
- Ableiten des Formmassenanteils in wenigstens eine Auffangkavität (500), die von wenigstens einem der Formteile (100, 101) begrenzt wird;
- Ableiten des Formmassenanteils über einen für das Einfüllen der Formmasse verwendeten Einfüllkanal (300, 504);
- Ableiten des Formmassenanteils über einen Kanal, der unter Zerstörung eines definierten Bereichs des Formwerkzeugs gebildet oder geöffnet wird.

12. Verfahren nach einem der vorangehenden Ansprüche,
wobei in der Kavität (14) wenigstens ein Kern (600) angeordnet ist, der in der Formmasse (202) eingebettet wird.

13. Vorrichtung (10) zum Formen einer aushärtbaren Formmasse (202), mit:
- einem Formwerkzeug (12), aufweisend ein erstes Formteil (100) und wenigstens ein zweites Formteil (101), die gemeinsam eine Kavität (14) begrenzen, in der eine aushärtbare Formmasse (202) aufnehmbar ist;
- einer Bewegungseinrichtung (18), die zum Erzeugen einer Relativbewegung zwischen dem ersten und dem zweiten Formteil (100, 101) eingerichtet ist;
- einer Steuereinrichtung (16), die dazu eingerichtet ist, die Bewegungseinrichtung (18) zum Erzeugen wenigstens einer die Kavität (14) verkleinernden ersten Relativbewegung zwischen dem ersten und dem zweiten Formteil (100, 101) anzusteuern, wenn die Kavität (14) zumindest teilweise mit der aushärtbaren Formmasse (202) ausgefüllt ist.
